# EUROPEAN PATENT APPLICATION

(11) **EP 0 777 394 A1**
(43) Date of publication of application: **04.06.1997**
(21) Application number: 95203323.1
(22) Date of filing: 01.12.1995
(51) Int. Cl.: H04Q 7/22, H04L 12/58

(54) **Method and apparatus for electronic mail transmission as short messages towards a mobile radio terminal**

(71) Applicant: ALCATEL BELL Naamloze Vennootschap, B-2018 Antwerpen 1 (BE)
(72) Inventor: Belpaire, Anthony, B-9051 St. Denijs Westrem (BE)

(57) **Abstract**

A mail service gateway (MSG) is coupled between at least one network (INTERNET, DATACOM) wherein an electronic mail service is supported and a network (GSMN) for mobile communication wherein a short message service is supported. The mail service gateway (MSG) decomposes an incoming electronic mail message and embeds successive parts thereof in successive short messages which are then transmitted through the network (GSMN) for mobile communication towards a mobile terminal (MT1, MT2). A short message processing device (SPD) which may be included in the mobile terminals (MT2) to make the mail service gateway (MSG) transparent is also disclosed. Furthermore, a preferred method to adapt existing telecommunication systems to enable support of this electronic mail service therein, is described.

## Description

The present invention relates to a mail service gateway for interfacing between at least one network wherein electronic mail messages are transmitted and a network for mobile communication as described in the preamble of claim 1, to a method for transmission of an electronic mail message between such a network and the network for mobile communication as described in the preamble of claim 15, and to a telecommunication system wherein this method is performed as described in the preamble of claim 18.

Such a gateway, method and telecommunication system are already known in the art, e.g. from the *European Patent Application EP 0616480*, *entitled* ' *Communication System for Transmission Between ATM Network and Mobile Radio System* '. Therein, data are sent from a network, called an ATM network, to a network for mobile communication, called a mobile radio system. Between the ATM network and the mobile radio system, a gateway called interface apparatus processes the data, removes overhead or header information from ATM cells and translates VPI and VCI data which are destination identifiers. From the processed ATM cells and translated destination identifiers, cells suitable for transmission to a mobile terminal of the mobile radio system are generated. Thus, electronic mail messages transmitted by a terminal of the ATM network pass through the interface apparatus and are adapted thereby so that they can be routed through the mobile radio system towards a mobile terminal. In this known solution however, the data are lost if the mobile terminal is switched off or is unreachable. Indeed, there is no automatic triggering of the mobile terminal when a message arrives. In other words, a connection setup between the terminal that sends the message and the mobile terminal where the message is sent to, is necessary.

An object of the present invention is to provide a gateway, a method and a telecommunication system wherein electronic mail messages are sent from a terminal of a fixed network to a mobile terminal of a network for mobile communication without the necessity of any kind of connection setup, and wherein automatic triggering is provided, even if the mobile terminal is switched off.

According to the invention, this object is achieved by the mail service gateway described in claim 1, via the method described in claim 15 and in the telecommunication system described in claim 18.

Indeed, in a network for mobile communication based on the global system for mobile communication (GSM) for example, a service centre may be provided to support transmission of short messages. Such short messages include up to 160 alphanumeric characters and are sent towards the mobile terminals over the signalling channels of the GSM network. The conventional protocol for transmission of short messages is well established in *the Global System for Mobile Communications (GSM) standard*, *e.g. in the document entitled* 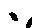 *GSM 09.02-Version 2', published in June 1992*. To avoid the severe length constraint that is respected by such short messages, the mail service gateway decomposes the electronic mail message and embeds parts thereof in successive short messages. These short messages are displayed by the mobile terminal or are stored on a SIM (Subscriber Identity Module) card.

Further advantages of the present invention are that the short messages are encrypted similarly to the GSM signaling channels as a consequence of which personality is guaranteed. Furthermore no connection to any kind of electronic mail access provider, neither the use of a PC (Personal Computer) terminal or modem is necessary.

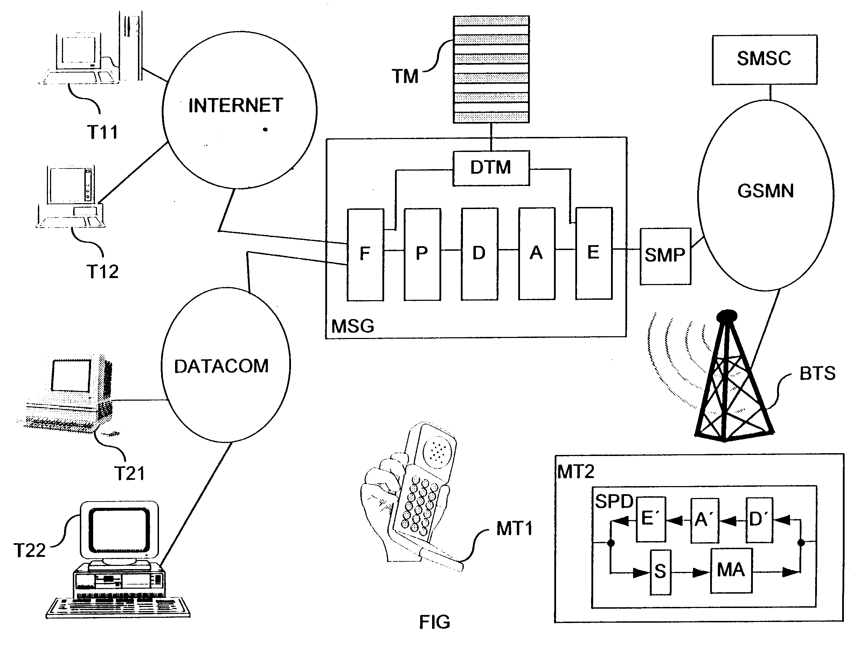

It is to be remarked that a service gateway which provides additional services to mobile users is also described in the article 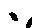 *Cellular Data - The Coming Boom', published in the Nokia Telecommunications Customer Magazine* 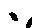 *Discovery', Vol. 39, October 1995, page 40-43*. This service gateway, as is seen from Fig. 2, is coupled between networks (INTERNET, ATM, FR, X.25) wherein an electronic mail service is supported and a GSM (Global System for Mobile Communications) network equipped with a short message switching centre (SMSC). However, as is described in the paragraph entitled 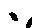 GSM data applications*'* on page 41, electronic mail messages are transmitted to mobile users via the GSM data channels, not via the signaling channels by using the short message service. Hence, an electronic mail message can not be sent to the mobile terminal during a speech or data call and the mobile user needs a portable computer to be able to read its mail.

A further characteristic feature of the present mail service gateway is that it is adapted to remove overhead data from the electronic mail message as described in claim 2.

In this way, the amount of data that is embedded in short messages is reduced and only the relevant parts of the electronic mail messages are transmitted towards the mobile terminal to be displayed or stored thereby.

Also a further characteristic feature of the present mail service gateway is that, as described by claims 3, 4 and 5, the mail service gateway may add information to the naked electronic mail message.

Thus, information with respect to the origin of the electronic mail message, the length and the actually displayed part thereof, is supplied to the destination mobile subscriber. This information is displayed by mobile terminals which are adapted to display the complete contents of all received short messages, but, as will be described later on, is used by mobile terminals which are equipped with a specific short message processing device to transparently generate the original electronic mail message from the sequence of short messages that is received.

An additional feature of the present invention is that, in a preferred implementation thereof, the electronic mail message and the additional information are embedded in the sequence of short messages in accordance with predetermined standard requirements.

This feature, described in claim 6, allows mobile terminals from different manufacturers but each having a short message processing device similar to the one that is described later on, to transparently receive electronic mail messages.

Also an additional feature of the present mail service gateway, described in claim 7, is a processing means comprised therein.

In this way, objects such as figures, tables, and so on, which can not be displayed by the mobile terminal are replaced by a short code such as FIG., TABLE, and so on. As a result, the mobile subscriber is aware of the presence of such objects in the electronic mail message. Furthermore, via this encoding performed by the processing means, the length of an electronic mail message is limited so that it can be stored e.g. on a SIM card. As is known by a person skilled in the art, the capacity of such a SIM card is limited to approximately 6 Kbytes.

Yet another additional feature of the present mail service gateway is that it is enabled to translate information in an electronic mail message identifying the destination mobile terminal into destination identifiers that are used by the short message service centre to route short messages through the network for mobile communication. This feature is described by claim 8, and in addition, as is seen from claim 9, the present mail service gateway thereto is provided with a table of destination identifiers.

Also a feature of the present mail service gateway is that delivery information is sent thereby to the originating terminal as is described in claim 10 and/or a delivery message may be sent to the mailbox of the mail sending party as described in claim 11.

Indeed, the short message switching centre stores information with respect to the delivery of the short messages to the mobile terminals. This delivery information is asked for by the mail service gateway and is shaped into a status report which is transmitted towards the originating terminal. In this way, the originating terminal keeps aware of the delivery of its electronic mail message to the mobile terminal.

Still a feature of the present mail service gateway, described in claim 12, is that it further includes means to generate from a sequence of short messages an electronic mail message.

Thus, bi-directional working of the mail service gateway is provided. In other words, either the mobile terminal or the terminal of fixed network can be the source of an electronic mail message routed through the present mail service gateway.

The present invention in addition also relates to a short message processing device that is integrated in a mobile terminal as described in claim 13.

Such a short message processing device assembles from a sequence of short messages an electronic mail message. As a consequence, seen from the point of view of the mobile subscriber, the working and functionality of the mail service gateway are made transparent and electronic mail messages are displayed in a user-friendly manner by the mobile terminal.

An additional characteristic feature of the present short message processing device is that it is equipped with mail decomposing means, information adding means and embedding means as described by claim 14. Thus, bi-directional working, i.e. transmission as well as reception of electronic mail messages embedded in a sequence of short messages, is supported by the mobile terminal.

Moreover, the present invention relates to a method for adapting an existing telecommunication system so that transmission of electronic mail messages between a normal terminal and a mobile terminal is enabled, as described in claim 20.

In a first phase of the method, electronic mail messages can be sent from the terminals of fixed networks to mobile terminals in a network for mobile communication which supports the short message service, by interconnecting these networks via a mail service gateway according to the present invention. The short messages then are displayed or stored upon receipt by a mobile terminal. Later on, in a second phase, mobile terminals can be equipped with a short message processing device according to the present invention, which assembles electronic mail messages from a sequence of short messages and which thus makes the mail service gateway transparent to the subscriber, and which allows user-friendly display of the received electronic mail messages. An important advantage of this method is that existing mobile terminals do not have to be modified immediately to enable them to receive electronic mail messages. In the first phase, the new service can be introduced without any need for standardization.

The above mentioned and other objects and features of the invention will become more apparent and the invention itself will be best understood by referring to the following description of an embodiment taken in conjunction with the accompanying drawing which represents a scheme of a telecommunication system according to the present invention.

The telecommunication system in the figure includes a first network INTERNET and a second network DATACOM wherein electronic mail messages can be transferred via the support of electronic mail services provided in these networks, INTERNET and DATACOM. Two terminals T11 and T12 of the first network INTERNET, and two terminals T21 and T22 of the second network DATACOM are shown. In addition, the telecommunication system includes a network for mobile communications GSMN and a mail service gateway MSG is also provided in the system. This mail service gateway MSG includes filtering means F, processing means P, decomposing means D, information adding means A, embedding means E and destination translating means DTM, and in addition is provided with a translation table memory TM. The network for mobile communications GSMN, on the other hand, is equipped with a short message switching centre SMSC, at least one base transceiver station BTS, and a short message port SMP. Two mobile terminals, MT1 and MT2, of the network for mobile communication GSMN are also drawn. Mobile terminal MT2 comprises a short message processing device SPD which includes information subtracting means S, mail assembling means MA, message decomposing means D*'*, information adding means A*'* and embedding means E*'*.

Both the first and second network, INTERNET and DATACOM, are coupled to inputs of the mail service gateway MSG. An output of the mail service gateway MSG is coupled to the short message port SMP of the network for mobile communications GSMN. Inside the mail service gateway MSG, the filtering means F, processing means P, decomposing means D, information adding means A and embedding means E are cascade connected between the inputs and the output thereof. Parallel to the series connection of the processing means P, decomposing means D and information adding means A, the destination translating means DTM is coupled between the output of the filtering means F and input of the embedding means E. As will be described later on, the inputs and the output of the mail service gateway MSG more specifically are terminals which can act as input and as output of the mail service gateway MSG, allowing thus flow of data in two opposite directions through the gateway MSG.

In the first network INTERNET, an electronic mail service allows the terminals T11, T12 to exchange electronic mail messages via the Simple Mail Transfer Protocol (SMTP). Similarly, in the second network, DATACOM, an electronic mail service allows the terminals T21, T22 to exchange electronic mail messages via the X.400 protocol.

In the network for mobile communications GSMN, the Short Message Service (SMS) is supported. This service is an unusual data transmission method since the short messages are transmitted over signaling channels as a result of which messages can be sent or received by a mobile terminal MT1, MT2 during a speech or data call of this mobile terminal MT1, MT2. These short messages can be up to 160 characters in length, and can be mobile in origin or in destination. The short message switching centre SMSC stores the short messages temporarily and forwards them to the destination mobile terminal MT1, MT2 when this mobile terminal MT1, MT2 appears in the network for mobile communication GSMN.

In the following paragraphs, it is explained how an electronic mail message transmitted by a terminal T12 of the first network INTERNET, is delivered to a mobile terminal MT1 of the network for mobile communications GSMN by using the SMTP protocol in the first network INTERNET and the Short Message Service in the network for mobile communications GSMN. Thereto, the working of the mail service gateway MSG is described.

Consider a situation wherein an electronic mail message is transmitted by terminal T12 in accordance with the Simple Mail Transfer Protocol (SMTP) but whose destination identifies the mobile terminal MT1 in the network for mobile communications GSMN. This electronic mail message is routed through the first network INTERNET via the electronic mail service supported therein, and is applied to the input/output terminal of the mail service gateway MSG.

The filtering means F then first subtracts all overhead information from the incoming electronic mail message. Such overhead information is used e.g. to route the message through the first network INTERNET. Also the destination identifier is subtracted from the electronic mail message and is applied to the destination translating means DTM. At the output of the filtering means F appears thus a 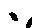 naked*'* electronic mail message containing user data only.

The 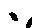 naked*'* message is applied to the processing means P which detects the presence of voluminous data objects such as figures, tables, graphics, and so on. Each of these objects is replaced by a short code, indicating the presence of this object in the originally transmitted electronic mail message. Such a short code can for example be FIG_1, FIG_2, TAB_1, GRA_1 if the original message contains two figures, a table and a graph respectively.

It has to be remarked that the contents of the electronic mail message may be decoded by the originating terminal T12 from a rich format e.g. into ASCII format. This is done for instance whenever the E-mail message is created by using a software packet such as Microsoft Word, Microsoft Excel, Microsoft Powerpoint, Wordperfect, Lotus 123, and so on. When the electronic mail message is decoded, the mail service gateway MSG is unable to detect therein the presence of objects such as figures, tables, ... . A first alternative embodiment of the mail service gateway MSG thereto is provided with an encoding unit, not shown in the figure, which re-transforms the ASCII format into the original rich format. A second alternative embodiment of the mail service gateway MSG which is not equipped with such an encoding unit, replaces such decoded data by a message indicating that the original electronic mail message contains an unrecognizable object of a specific length. As a result, the mobile subscriber is aware of the presence of such an object in the original E-mail message which can be consulted in its mailbox in the first network INTERNET. Referring to the above remark, it is further to be noticed that a majority of electronic mail messages transmitted in existing networks which support E-mail transmission, do not contain objects such as figures, tables, graphs, and so on, and therefore are not created by using dedicated software packets. Furthermore, it may be expected that future E-mail services may allow users to create and send such objects without the need of dedicated software and thus without the need of decoding and encoding.

The processed mail message at the output of the processing means P contains all user data that will be transmitted to the destination mobile terminal MT1. In the decomposing means D, the processed mail message is decomposed into a sequence of data blocks which can be encapsulated one by one in short messages.

To each one of the data blocks a similar extension data block is added by the information adding means A in the mail service gateway MSG. This extension data block contains in a first field the total number of short messages occupied by data of the electronic mail message that has to be transmitted from terminal T12 to mobile terminal MT1. This information is obtained from the decomposing means D. In a second field, the information adding means A writes the index number of the actual short message in the train of short messages occupied by the E-mail message. A third field in the extension data block is used to indicate the originating terminal, i.e. T12.

Simultaneously with the processing, decomposing and information adding, the destination identifier, subtracted from the original electronic mail message and applied to the destination translating means DTM, is translated thereby into a new destination identifier that can be used for routing the short messages through the network for mobile communications GSMN. The destination translation means DTM thereto consults the destination translation table memory TM. Therein, each destination identifier used in the first network INTERNET for routing electronic mail messages therein, is associated with a destination identifier used in the network for mobile communications GSMN.

The embedding means E additionally embeds the new destination identifier, the data blocks and their related extension data blocks in short messages and supplies these short messages to the network for mobile communications GSMN via the short message port SMP.

From this moment on, the Short Message Switching Centre SMSC takes care of the short messages, if needed stores them temporarily, and forwards them to the mobile terminal MT1 as soon as this terminal MT1 appears in the network for mobile communications GSMN.

When received by the mobile terminal MT1, the complete contents of the short message is displayed on the display thereof. Thus, the mobile subscriber gets an indication of the total number of short messages constituting the E-mail message, an indication that the actually displayed short message is e.g. the fifth short message in the sequence, and he is informed about the sending party, i.e. terminal T12 in the described example. The remaining part of the display is occupied by the user data of the electronic mail message.

The electronic mail message is not only forwarded to the mobile terminal MT1 of the subscriber but also to his mailbox within the first network INTERNET. As a result, the subscriber is enabled to consult also the objects which cannot be displayed on the display of the mobile terminal MT1 and which were replaced by the earlier described short codes.

The Short Message Service Centre (SMSC) furthermore generates a delivery status report. The information therein is sent towards the mail service gateway MSG which adapts the delivery status report to be sent to the originating terminal T12 in the first network INTERNET.

A second situation is considered wherein a second electronic mail message is transmitted from a terminal T21 of the second network DATACOM to a second mobile terminal MT2. This second electronic mail message is routed through the second network DATACOM in accordance with the X.400 protocol, arrives at the mail service gateway MSG and is treated therein similarly to the first electronic mail message which was transmitted from terminal T12 to mobile terminal MT1 in the above described first situation. The mobile terminal MT2 where the second electronic mail message is sent to however is equipped with a short message processing device SPD according to the present invention. This short message processing device SPD assembles the sequence of short messages in such a way that the mobile subscriber does not have to read the whole sequence of short messages to reconstruct the original mail message. In other words, the short message processing device SPD makes the encapsulation in short messages transparent to the mobile subscriber. In more detail, the information subtracting means S in the short message processing device SPD filter the extension data blocks from the short messages. The remaining 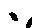 naked*'* user data of successive short messages are assembled into the original electronic mail message by the mail assembling means MA also provided in the short message processing device. To perform the assembling correctly, the information in the first and second fields of the extension data blocks, captured by the subtracting means S is applied to the mail assembling means MA.

Furthermore, according to the present invention, the length of messages transmitted in the opposite direction, i.e. from a mobile terminal MT2 equipped with a short message processing device SPD towards a fixed terminal T21 in the second network DATACOM, is no longer limited to the length of a single short message. Message decomposing means D*'*, information adding means A*'* and embedding means E*'* provided in the short message processing device SPD decompose messages whose length exceeds the 160 byte length of a short message, add information to the different data blocks to enable reassembling the data blocks, and embed the data blocks with the added information in successive short messages respectively. In addition, the short messages are routed to the mail service gateway MSG by the short message switching centre SMSC. To be able to reassemble the short messages, the mail service gateway MSG between its terminal connected to the short message port SMP and its terminal connected to the second network DATACOM includes combining means, not shown in the figure, which generate from the sequence of short messages the original message. This original message is applied to the second network DATACOM wherein it is transported to the destination terminal T21.

It is to be remarked that in the figure, the contents of the mail service gateway MSG and mobile terminal MT2 is represented by means of functional blocks F, P, D, A, E, SPD, S, MA, D*'*, A*'*, E*'*, whose components are not described in further detail. However, from the above given description of the working of these functional blocks, it will be clear to a person skilled in the art how these functional blocks or alternative embodiments thereof can be manufactured.

Also a remark is that the implementation of the present method is not restricted to networks operating according to the SMTP or X.400 protocols or to a network for mobile communications of the GSM type but can be used to enable electronic mail transfer between any network wherein an electronic mail service is supported and a network for mobile communication wherein short messages are transmitted via signalling channels.

Furthermore it has to be noticed that the provision of a short message processing device SPD according to the present invention is not necessary for a mobile terminal to receive E-mail embedded in short messages. As already indicated, electronic mail messages according to the present invention can also be delivered to existing mobile handsets MT1. The only disadvantage compared to handsets MT2 which are equipped with a short message processing device SPD is that the messages are displayed in a less user friendly way.

While the principles of the invention have been described above in connection with specific apparatus, it is to be clearly understood that this description is made only by way of example and not as a limitation on the scope of the invention.

## Claims

1. A mail service gateway (MSG) for interfacing between at least one network (INTERNET, DATACOM) wherein an electronic mail service is supported and a network (GSMN) for mobile communication, said mail service gateway (MSG) being adapted to enable transmission of an electronic mail message from a terminal (T11, T12, T21, T22) of a said network (INTERNET, DATACOM) to a mobile terminal (MT1, MT2) of said network (GSMN) for mobile communication, and said mail service gateway (MSG) thereto including:
a) decomposing means (D) provided to decompose said electronic mail message and to generate therefrom a sequence of data blocks to be routed through said network (GSMN) for mobile communication, characterized in that said network (GSMN) for mobile communication includes a short message service centre (SMSC) adapted to support a short message service such as according to the Global System for Mobile Communications (GSM) standard, and that said mail service gateway (MSG) further includes:
b) embedding means (E) adapted to embed successive ones of said data blocks in subsequent short messages and adapted to apply said short messages to a short message port (SMP) of said network (GSMN) for mobile communication to be routed therein to said mobile terminal (MT1, MT2) using said short message service.

2. A mail service gateway (MSG) according to claim 1, characterized in that said mail service gateway (MSG) further includes:
c) filtering means (F) adapted to remove overhead information from said electronic mail message before it is applied to said decomposing means (D).

3. A mail service gateway (MSG) according to claim 1 or claim 2, characterized in that said mail service gateway (MSG) further includes:
d) information adding means (A) provided to add to each data block of said sequence of data blocks an extension data block comprising an origin identifier to identify said terminal (T11, T12, T21, T22),
said embedding means (E) furthermore being adapted to embed said data block and said extension data block in a short message of said subsequent short messages.

4. A mail service gateway (MSG) according to claim 1 or claim 2, characterized in that said mail service gateway (MSG) further includes:
d) information adding means (A) provided to add to each data block of said sequence of data blocks an extension data block comprising an origin identifier to identify said terminal (T11, T12, T21, T22) an indication of the total number of said short messages in which said successive data blocks are embedded, said embedding means (E) furthermore being adapted to embed said data block and said extension data block in a short message of said subsequent short messages.

5. A mail service gateway (MSG) according to claim 1 or claim 2, characterized in that said mail service gateway (MSG) further includes:
d) information adding means (A) provided to add to each data block of said sequence of data blocks an extension data block comprising an origin identifier to identify said terminal (T11, T12, T21, T22) an index number of said data block in said sequence of data blocks,
said embedding means (E) furthermore being adapted to embed said data block and said extension data block in a short message of said subsequent short messages.

6. A mail service gateway (MSG) according to claim 3, characterized in that said embedding means (E) is adapted to embed said data block and said extension data block in said short message in accordance with predetermined standard specifications.

7. A mail service gateway (MSG) according to claim 1, characterized in that said mail service gateway (MSG) further includes:
e) processing means (P) adapted to replace objects which form part of said electronic mail message but which can not be displayed or stored by said mobile terminal (MT1, MT2), by a short code.

8. A mail service gateway (MSG) according to claim 1, characterized in that said mail service gateway (MSG) further includes:
f) destination translating means (DTM) adapted to translate destination information used to route said electronic mail message through said network (INTERNET, DATACOM) into a destination identifier that is used to route said short messages through said network (GSMN) for mobile communication.

9. A mail service gateway (MSG) according to claim 8, characterized in that said mail service gateway (MSG) is equipped with a destination translation table memory (TM) provided to store therein destination identifiers similar to said destination identifier for all mobile terminals similar to said mobile terminal (MT1, MT2).

10. A mail service gateway (MSG) according to claim 1, characterized in that said mail service gateway (MSG) further includes:
g) message delivery information means adapted to receive from said short message service centre (SMSC) delivery information with respect to delivery of said sequence of short messages to said mobile terminal (MT1, MT2), and adapted to transmit said delivery information to said terminal (T11, T12, T21, T22).

11. A mail service gateway (MSG) according to claim 1, characterized in that said mail service gateway (MSG) further includes:
h) message delivery information means adapted to receive from said short message service centre (SMSC) delivery information with respect to delivery of said sequence of short messages to said mobile terminal (MT1, MT2), and adapted to transmit a delivery message to a mailbox in said network (INTERNET, DATACOM) of the originating party of said electronic mail message.

12. A mail service gateway (MSG) according to claim 1, characterized in that said mail service gateway (MSG) further includes:
h) combining means adapted to combine a sequence of said short messages transmitted by a said mobile terminal (MT1, MT2) to generate therefrom a said electronic mail message for transmission thereof towards a said terminal (T11, T12, T21, T22).

13. A short message processing device (SPD) included in a mobile terminal (MT2) characterized in that said short message processing device (SPD) is adapted to assemble an electronic mail message from a sequence of short messages such as according to the Global System for Mobile Communications (GSM) standard applied thereto, said electronic mail message previously being transmitted by a terminal (T11, T12, T21, T22) in a network (INTERCOM, DATACOM) wherein an electronic mail service is supported, and being decomposed in data blocks embedded in said sequence of short messages, and said short message processing device (SPD) therefore including:
a) information subtracting means (S) adapted to subtract from each short message in said sequence of short messages an extension data block; and
b) mail assembling means (MA) adapted to assemble, based on information in said extension data block, said electronic mail message from data blocks comprised in said short messages.

14. A short message processing device (SPD) according to claim 11, characterized in that said short message processing device further includes:
c) message decomposing means (D*'*) provided to decompose a message to be transmitted by said mobile terminal (MT2) into a sequence of data blocks;
d) information adding means (A*'*) adapted to add to each data block of said sequence of data blocks an extension data block; and
e) embedding means (E*'*) adapted to embed each said data block and said extension data block in a said short message.

15. A method for transmission of an electronic mail message from a terminal (T11, T12, T21, T22) in a network (INTERNET, DATACOM) wherein an electronic mail service is supported to a mobile terminal (MT1, MT2) in a network (GSMN) for mobile communication, characterized in that said method includes the steps of:
a) decomposing said electronic mail message in successive data blocks;
b) embedding said successive data blocks in respective subsequent short messages;
c) applying said subsequent short messages to said network (GSMN) for mobile communication via a short message port (SMP) thereof; and
d) transmitting said short messages towards said mobile terminal (MT1, MT2) using a short message service such as according to the Global System for Mobile Communications (GSM) standard that is supported in said network (GSMN) for mobile communications.

16. A method according to claim 13, characterized in that said method further includes the steps of:
e) removing overhead data from said electronic mail message;
f) replacing objects which form part of said electronic mail message but which cannot be displayed or stored by said mobile terminal (MT1, MT2) by a short code; and
g) adding an extension data block to each of said data blocks, said steps e, f, and g being performed before said embedding.

17. A method according to claim 13 characterized in that said method further includes the step of:
h) translating destination information used to route said electronic mail message through said network (INTERNET, DATACOM) into a destination identifier used to route said short messages through said network (GSMN) for mobile communication.

18. A telecommunication system comprising at least one network (INTERNET, DATACOM) wherein an electronic mail service is supported coupled to a network (GSMN) for mobile communication via a mail service gateway (MSG) which is adapted to enable transmission of an electronic mail message from a terminal (T11, T12, T21, T22) of a said network (INTERNET, DATACOM) to a mobile terminal (MT1, MT2) of said network (GSMN) for mobile communication, said mail service gateway thereto including:
a) decomposing means (D) provided to decompose said electronic mail message and to generate therefrom a sequence of data blocks to be routed through said network (GSMN) for mobile communication, characterized in that said network (GSMN) for mobile communication includes a short message service centre (SMSC) adapted to support a short message service such as according to the Global System For Mobile Communications (GSM) standard, and that said mail service gateway (MSG) further includes:
b) embedding means (E) adapted to embed successive ones of said data blocks in subsequent short messages and adapted to apply said short messages to a short message port (SMP) of said network (GSMN) for mobile communication to be transferred therein to said mobile terminal (MT1, MT2) using said short message service.

19. A telecommunication system according to claim 15, characterized in that said mail service gateway (MSG) further includes:
c) filtering means (F) adapted to remove overhead information from said electronic mail message before it is applied to said decomposing means (D); and
d) information adding means (A) provided to add to each data block of said sequence of data blocks an extension data block,
and moreover in that said mobile terminal (MT2) is equipped with a short message processing device (SPD) which includes:
a) information subtracting means (S) adapted to subtract from each short message in said sequence of short messages said extension data block; and
b) mail assembling means (MA) adapted to assemble, based on information in said extension data block, said electronic mail message from data blocks comprised in said short messages.

20. A method to adapt a telecommunication system comprising at least one network (INTERNET, DATACOM) wherein an electronic mail service is supported and a network (GSMN) for mobile communication wherein a short message service such as according to the Global System for Mobile Communications (GSM) standard is supported, characterized in that said method includes a first step of coupling said at least one network (INTERNET, DATACOM) to said network (GSMN) for mobile communication via a mail service gateway (MSG) which is adapted to decompose an electronic mail message that is transmitted from a terminal (T11, T12, T21, T22) of a said network (INTERNET, DATACOM) to a mobile terminal (MT1) of said network (GSMN) for mobile communication into a sequence of data blocks, and which is adapted to embed successive ones of said data blocks in successive short messages transmitted towards said mobile terminal (MT1) to be displayed or stored thereby, and a second step, independent from said first step, wherein mobile terminals (MT2) similar to said mobile terminal (MT1) are provided with a short message processing device which is adapted to assemble said electronic mail message from said sequence of short messages in such a way that said mail service gateway (MSG) becomes transparent to said mobile terminal (MT2).
